# EUROPÄISCHE PATENTSCHRIFT

(11) **EP 0 512 551 B1**
(45) Veröffentlichungstag und Bekanntmachung des Hinweises auf die Patenterteilung: **28.06.1995**
(21) Anmeldenummer: 92107763.2
(22) Anmeldetag: 08.05.1992
(51) Int. Cl.: G02F 1/136

(54) **Flüssigkristall-Anzeigevorrichtung**
Liquid crystal display device
Dispositif d'affichage à cristal liquide

(30) Priorität: 10.05.1991 DE 4115247
(43) Veröffentlichungstag der Anmeldung: 11.11.1992
(73) Patentinhaber: Daimler-Benz Aktiengesellschaft, 70546 Stuttgart (DE)
(72) Erfinder: Schmolla, Wilfried, Dr., W-6100 Darmstadt (DE)
(74) Vertreter: Vogl, Leo, Dipl.-Ing.

(56) Entgegenhaltungen:
- EP-A- 0 236 169
- EP-A- 0 411 928
- PATENT ABSTRACTS OF JAPAN vol. 14, no. 341 (P-1081)24. Juli 1990 & JP-A 02 120 724
- PATENT ABSTRACTS OF JAPAN vol. 13, no. 135 (P-851)(3483) 5. April 1989 & JP-A-63 303321

## Beschreibung

Die Erfindung betrifft eine Flüssigkristall-Anzeigevorrichtung mit einer Vielzahl von Bildpunkten mit jeweils mindestens einem zugeordneten Feldeffekttransistor mit jeweils einer Gate-, einer Source- und einer Drain-Elektrode, wobei die Drain- oder die Source-Elektrode mit dem zugehörigen Bildpunkt in leitender Verbindung steht, während die andere der beiden vorgenannten Elektroden an eine erste Leiterbahn und die Gate-Elektrode über einen Kondensator an eine zweite Leiterbahn angeschlossen ist, wobei an die Leiterbahnen in gleicher Weise einheitlich mehrere Feldeffekttransistoren angeschlossen sind und die Leiterbahnen gegeneinander isoliert sind.

Eine derartige Flüssigkristall-Anzeigevorrichtung ist aus "Patents Abstracts of Japan P-1081", 24.07.1990, Vol. 14/No. 341: JP 2-120724 (A) bekannt. Bei dieser Ausführungsform ist die Gate-Elektrode eines jeden Feldeffekttransistors über einen Kondensator an eine gemeinsame Leiterbahn angeschlossen. Auf diese Weise soll bei einem Isolierungsfehler zwischen Gate- und Drain-Elektrode eines Feldeffekttransistors ein Kurzschluss zwischen den Leiterbahnen verhindert werden. Ein solcher Kurzschluss würde zu einem Ausfall von allen Bildpunkten, die über weitere Feldeffekttransistoren mit den kurzgeschlossenen Leiterbahnen verbunden sind, führen.
Wenn nun der Gate-Elektrode ein Kondensator vorgeschaltet wird, tritt lediglich ein punktueller Fehler in der zugehörigen Flüssigkristall-Anzeigevorrichtung auf, weil nämlich nur der an dem defekten Feldeffekttransistor angeschlossene Bildpunkt ausfällt.

Die bekannte Schaltung weist keine Massnahme zur zuverlässigen und fehlerfreien Einstellung des zeitlichen Mittelwertes der zwischen Gate- und Drain-Elektrode liegenden Spannung (Gleichspannungsanteil), im folgenden u₂ genannt, auf. Ein der Gate-Elektrode vorgeschalteter Kondensator allein mit einem undefinierten Verlustwiderstand führt sowohl zu einem undefinierten zeitlichen Mittelwert der Spannung u₂, d. h. zu einer undefinierten Lage der Spannung u₂ zum Nullpunkt, als auch zu einem undefinierten zeitlichen Verlauf der Spannung u₂. Der Innenwiderstand des vorgeschalteten Kondensators und die dazu in Reihe liegenden Innenwiderstände im Innern des Feldeffekttransistors bilden einen undefinierten Spannungsteiler; dies kann zur Folge haben, dass der betreffende Bildpunkt durch die Spannung u₂ nicht mehr fehlerfrei angesteuert wird, obwohl an der zugehörigen Zeilen- und Spaltenleitung die erforderliche Spannung anliegt.

Die fehlerhafte Spannung u₂ hat folgende Ursachen:
1. Die Zeitkonstanten des Netzwerks aus Feldeffekttransistor und vorgeschaltetem Kondensator sind so gross, dass die Spannung u₂ nach längerer Betriebsdauer der Anzeige "wegdriftet".
2. Die Spannung u₂ hängt über den Innenwiderstand zwischen Gate und Drain des Feldeffekttransistors vom Potential am Bildpunktkondensator ab. Das Potential am Bildpunktkondensator ist bildabhängig für jedem Bildpunkt unterschiedlich. Die Spannung u₂ wird deshalb inhomogen über die Anzeige gestört.
3. Die Nichtlinearität und die betriebs- und herstellungsbedingte Inhomogenität der Innenwiderstände des Feldeffekttransistors führen zu inhomogenen Störungen.

Eine Kompensation der Störungen durch angepasste Signale ist nur jeweils für den einzelnen Bildpunkt möglich. Eine gleichartige Kompensation für die Vielzahl der einzelnen Bildpunkte ist jedoch unmöglich, da die Verhältnisse an den verschiedenen Bildpunkten zu unterschiedlich sind.

Eine Flüssigkristall-Anzeigevorrichtung - allerdings ohne einen an der Gate-Elektrode angeschlossenen Kondensator - ist in "Applied Physics", 1981, Seiten 357 bis 362 beschrieben. Die Bildpunkte mit ihren zugeordneten Feldeffekttransistoren sind rasterförmig angeordnet, wobei die Gate-Elektroden der in einer Zeile angeordneten Feldeffekttransistoren miteinander verbunden sind und für jede Zeile ein Anschluss herausgeführt ist, während die Source-Elektroden der Feldeffekttransistoren spaltenförmig zusammengefasst und über eine mit einem Anschluss versehene Leiterbahn verbunden sind. Die Bildpunkte werden über Signale gesteuert, die aus einer logischen Schaltung stammen und den zeilen- und spaltenförmig herausgeführten Anschlüssen der Gate- und Source-Elektroden zugeführt werden.

Die Abfolge bei der Herstellung einer Matrix ist technologieabhängig, z. B. werden zunächst die Bildpunkte und die Gate-Elektroden bzw. Gate-Leiterbahnen auf einem isolierenden Substrat ausgebildet. Diese Struktur wird anschliessend mit einer Isolierschicht, beispielsweise aus Siliziumoxid, überzogen, auf der unter anderem dann die Drain-und Source-Elektroden hergestellt werden. Die die Gate- und Source-Elektroden verbindenen Leiterbahnen verlaufen zeilen- und spaltenförmig zueinander, wobei Kreuzungspunkte zwischen den entsprechenden Leiterbahnen entstehen, die durch die Isolierschicht voneinander getrennt sind.

Ebenso sind die Gate- und Source-Elektroden des Feldeffekttransistors durch eine Isolierschicht voneinander getrennt. Entsteht nun zwischen der Gate- und Source-Elektrode aufgrund einer defekten Isolierung ein Kurzschluss zwischen den an die Gate- und Source-Elektroden des Feldeffekttransistors angeschlossenen Leiterbahnen, so wird das an den Leiterbahnen anliegende Potential verfälscht und das verfälschte Potential an die angeschlossenen Feldeffekttransistoren bzw. Bildpunktelemente weitergeleitet. Dies führt zu zeilen- und spaltenförmigen Bildausfällen.

Der Erfindung liegt die Aufgabe zugrunde, eine Flüssigkristall-Anzeigevorrichtung verfügbar zu machen, bei der ein im Ergebnis auftretender Kurzschluss zwischen den Leiterbahnen, bewirkt durch einen Fehler in der Isolierschicht zwischen der mit einer ersten Leiterbahn verbundenen Elektrode des Feldeffekttransistors und der mit einer zweiten Leiterbahn verbundenen Gate-Elektrode, nicht zu einem Ausfall mehrerer, mit den Leiterbahnen verbundener Bildpunkte führt und bei der im kurzschlussfreien Falle die Bildpunkte über die Gate-Elektroden der Feldeffekttransistoren auch bei längerer Dauer der Ansteuerung fehlerfrei und zuverlässig angesteuert werden.

Diese Aufgabe wird gemäss der Erfindung dadurch gelöst, dass der Kondensator mit einem Widerstand eine Parallelschaltung bildet und dass Kapazität und Widerstandswert der Parallelschaltung so ausgelegt sind, dass der Bildpunkt über die Gate-Elektrode auch bei längerem Betrieb und inhomogenen Feldeffekttransistoreigenschaften zuverlässig gesteuert wird und dass im Falle eines Kurzschlusses zwischen der Gate-Elektrode und der mit der ersten Leiterbahn verbundenen Elektrode eines einzelnen Feldeffektransistors die übrigen Bildpunkte, davon unbeeinflusst, störungsfrei ansteuerbar sind.

Auf diese Weise wird erreicht, dass die den Feldeffekttransistor steuernde Spannung u₂ zwischen der Gate-Elektrode und der mit der ersten Leiterbahn verbundenen Elektrode des Feldeffekttransistors sowohl für den Einschalt- als auch für den Ausschaltzustand des Transistors innerhalb einer Bandbreite liegt, die ein zuverlässiges und fehlerfreies Schalten des Feldeffekttransistors gewährleistet. Durch den parallelgeschalteten Widerstand ist die Zuverlässigkeit beim Schalten auch dann gegeben, wenn durch äussere Einflüsse, beispielsweise durch eine Temperaturänderung, und bei einer längeren Ansteuerung des Bildpunkts sich die Innenwiderstände des Kondensators und des Feldeffekttransistors ändern. Ohne den parallelgeschalteten Widerstand würde die an der Gate-Elektrode anliegende Spannung bei langdauerndem Betrieb driften.

Im Falle eines Kurzschlusses zwischen der Gate- und der mit einer Leiterbahn direkt verbundenen Elektrode des Feldeffektransistors wird mit Hilfe der Parallelschaltung von Kondensator und Widerstand ein Kurzschluss zwischen den Leiterbahnen verhindert.

Das Wesen der Erfindung soll anhand zweier in vier Figuren dargestellter Ausführungsbeispiele näher erläutert werden.

Es zeigen
- Fig. 1: einen Ausschnitt mit einem Bildpunkt der Flüssigkristall-Anzeigevorrichtung,
- Fig. 2: den Ausschnitt einer Flüssigkristall-Anzeigevorrichtung, bei der zur Ansteuerung des Bildpunktes zwei Feldeffekttransistoren vorgesehen sind,
- Fig. 3: den Ersatz des Feldeffekttransistors durch nichtlineare Widerstände und Kondensatoren in einem Ausschnitt der Flüssigkristall-Anzeigevorrichtung und
- Fig. 4: den zeitlichen Verlauf der Spannung u₂ an der Gate-Elektrode und der den Feldeffekttransistor steuernden Spannung u₁ zwischen den zugehörigen Leiterbahnen.

In allen Fig. sind gleiche Teile auch mit den gleichen Bezugszeichen versehen.

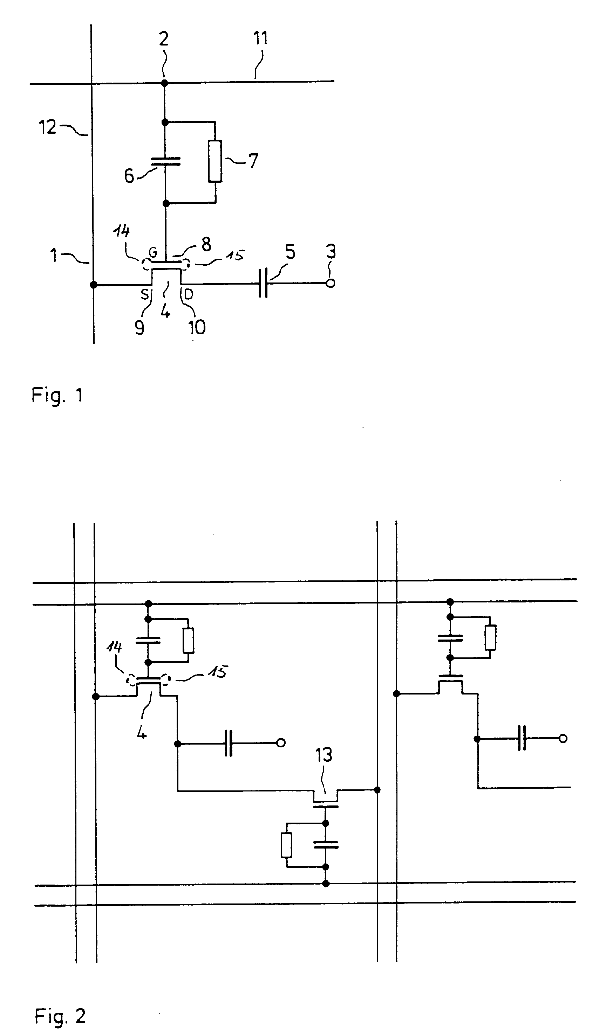

Nach Fig. 1 liegt der Bildpunkt bzw. die Bildpunktkapazität (5) an einem Potentialanschluss (3). Der Feldeffekttransistor (4) weist eine Gate-Elektrode (8), eine Drain-Elektrode (10) und eine Source-Elektrode (9) auf. Die Drain-Elektrode (10) ist mit der Bildpunktkapazität (5) verbunden und die Source-Elektrode (9) an einem Anschlusspunkt (1) mit einer ersten Leiterbahn (12) (es ist auch möglich, die Bildpunktkapazität (5) an die Source-Elektrode (9) und die Drain-Elektrode (10) an die erste Leiterbahn (12) anzuschliessen).
An dieser ersten Leiterbahn (12) sind weitere - allerdings nicht in der Fig. dargestellte - Source-Elektroden (9) von benachbarten Feldeffekttransistoren (4) angeschlossen. Die Gate-Elektrode (8) ist über ein Netzwerk mit einem Anschlusspunkt (2) einer zweiten Leiterbahn (11) verbunden; auch an dieser zweiten Leiterbahn (11), die in rechtem Winkel zu der ersten Leiterbahn (12) angeordnet ist, liegen über gleichgestaltete Netzwerke die Gate-Elektroden (8) benachbarter Feldeffekttransistoren (4) an. Eine Vielzahl von Bildpunktkapazitäten (5) ist in Form einer Matrix auf einem lichtdurchlässigen und isolierenden Substrat angeordnet, wodurch eine Flüssigkristall-Anzeigevorrichtung mit einzeln ansteuerbaren Bildpunkten gebildet wird. Die erste Leiterbahn (12) und die zweite Leiterbahn (11) bilden eine Spalte und eine Zeile dieser Matrix.

Die zuvor erwähnten Netzwerke bestehen aus einer Parallelschaltung eines Kondensators (6) und eines Widerstands (7). Der Wert für das Produkt aus Widerstandswert und Kapazität der Parallelschaltung liegt zwischen 0,04 s und 400 s.

Der Feldeffekttransistor (4) wird über die Gate-Elektrode (8) angesteuert.

Bei einem Kurzschluss (14) zwischen der Gate- (8) und der Source-Elektrode (9) des Feldeffekttransistors (4) ist zwischen der Leiterbahn (11) und der Leiterbahn (12) eine kleine Kapazität (6) und ein hoher Widerstand (7) geschaltet. Der Kondensator (6) und der Widerstand (7) sind so zu bemessen, dass es im Falle eines Kurzschlusses (14) nicht zu einem Ausfall mehrerer mit den Leiterbahnen (11, 12) verbundener Bildpunkte kommt und im kurzschlussfreien Fall die Bildpunkte über die Gate-Elektroden (8) der Feldeffekttransistoren (4) auch bei längerem Betrieb und inhomogenen Bedingungen fehlerfrei ansteuerbar sind.

Bei einem Ausführungsbeispiel nach Fig. 2 ist der Bildpunkt mit zwei Feldeffekttransistoren (4) und (13) verbunden, die in der gleichen Weise wie bei Fig. 1 an den Leiterbahnen angeschlossen sind, und zwar sind die Drain-Elektroden mit der Bildpunktkapazität verbunden, während die Source-Elektroden getrennt voneinander an jeweils eine Leiterbahn, die innerhalb der Flüssigkristall-Anzeigevorrichtung eine Spalte bildet, geführt sind. Das bereits im Zusammenhang mit Fig. 1 beschriebene Netzwerk mit einer Parallelschaltung aus einem Kondensator und einem Widerstand befindet sich jeweils zwischen der Gate-Elektrode eines jeden Feldeffekttransistors (4, 13) und der zugehörigen Leiterbahn, die eine Zeile innerhalb der Flüssigkristall-Anzeigevorrichtung bildet. Es sind also bei dieser Ausführungsform für jeden Bildpunkt zwei "Spalten"-Leiterbahnen und zwei "Zeilen"-Leiterbahnen vorhanden; wenn ein zu einem Bildpunkt gehöriger Feldeffekttransistor (4 oder 13) vollständig betriebsuntauglich ist, übernimmt der zweite Feldeffekttransistor (13 oder 4) die Ansteuerung des Bildpunktes.

Bei einem Ausführungsbeispiel nach Fig. 2 muss der Widerstand einer jeden der zuvor geschilderten Parallelschaltungen neben den oben genannten Bedingungen eine weitere Bedingung erfüllen. Der Widerstand muss nämlich so bemessen werden, dass bei einem Kurzschluss (15) zwischen der Gate- und der Drain-Elektrode nur eine vernachlässigbare Entladung der Bildpunktkapazität (5) über den Widerstand (7) stattfindet.

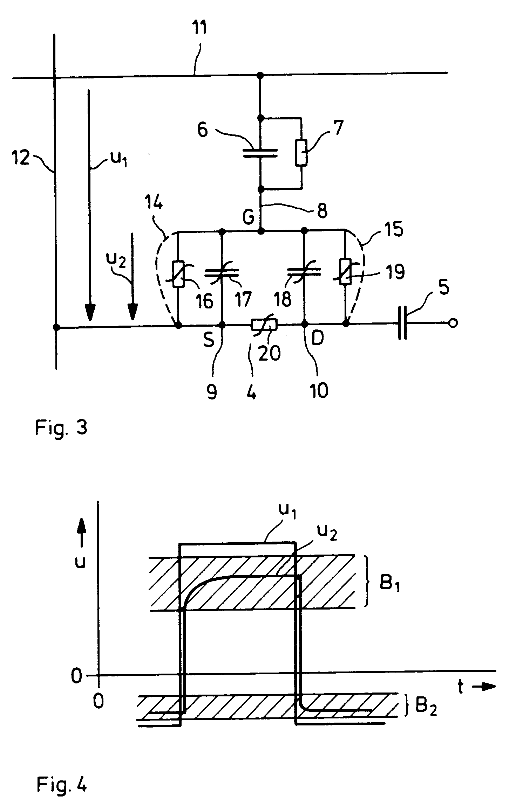

Fig. 3 zeigt im wesentlichen die Schaltung nach der Fig. 1, es ist allerdings anstelle des Feldeffekttransistors (4) sein Ersatzschaltbild mit nichtlinearen Bauelementen dargestellt: Zwischen der Gate-Elektrode (8) und der Source-Elektrode (9) befindet sich ein nichtlinearer Widerstand (16) und ein nichtlinearer Kondensator (17); eine solche Parallelschaltung aus einem nichtlinearen Widerstand (19) und einem nichtlinearen Kondensator (18) ist auch zwischen der Gate-Elektode (8) und der Drain-Elektrode (10) vorhanden. Die Source-Elektrode (9) und die Drain-Elektrode (10) sind über einen nichtlinearen Widerstand (20) verbunden. Zwischen der Leiterbahn (11) und der Leiterbahn (12) liegt eine Spannung (u₁) an.
An der Parallelschaltung aus Widerstand (16) und Kondensator (17) liegt die Spannung (u₂).
In Fig. 4 ist dargestellt, in welchem Bereich die Spannung (u₂) liegen muss, damit bei einem ebenfalls eingetragenen Verlauf der Spannung (u₁) der betreffende Bildpunkt störungsfrei angesteuert wird.
Für den Fall einer die Form eines Impulses aufweisenden Spannung (u₁) zur Ansteuerung des Bildpunktes muss die Spannung (u₂) mindestens halb so gross sein wie die Spannung (u₁); ein zulässiger Bereich für die Spanung (u₂) während der Dauer des Impulses ist durch das Band (B₁) angegeben; wenn die Spannung (u₂) ausserhalb dieses Bereiches liegt, wird der Bildpunkt nicht angesteuert.
Die bekannte Schaltung mit einem der Gate-Elektrode vorgeschalteten Kondensator ohne parallel geschalteten Widerstand lässt im Ergebnis keine Massnahme erkennen, dass die Spannung (u2) zuverlässig innerhalb der in Fig. 4 dargestellten Bänder (B1) und (B2) liegt. Die Werte der Spannung (u₂) müssen innerhalb einer Bandbreite liegen, für im Falle einer Ansteuerung des betreffenden Bildpunktes innerhalb des Bandes (B1) und im anderen Falle innerhalb des Bandes (B2), um ein zuverlässiges und fehlerfreies Schalten des Feldeffekttransistors zu gewährleisten.
Mögliche Werte für Kapazität und Widerstand der Parallelschaltung liegen in einem weiten Bereich; sie sind beispielsweise abhängig von der Grösse des Bildpunkts. Bei der richtigen Bemassung des Widerstandes sind die Innenwiderstände (16, 19) des Feldeffekttransistors (4) zu berücksichtigen; der Widerstand (7) der Parallelschaltung und diese Innenwiderstände (16, 19) bilden nämlich einen Spannungsteiler, an dem die Spannung (u₁) anliegt. Die Innenwiderstände der einzelnen Fedeffekttransistoren (4) unterliegen allerdings herstellungsbedingt grossen Streuungen.

Günstig bei der Herstellung von Kondensator (6) und Widerstand (7) ist die Anwendung der Dünnschichttechnik. Insbesondere durch Festlegung von Material und Geometrie der aufzutragenden Schichten lassen sich bei der Fertigung von derartigen Dünnschichtbauelementen Widerstandswert und Kapazität gut einstellen.

Es sollten Widerstandswert und Kapazität so bemessen sein, dass der Betrag der steuernden Spannung (u₂) zwischen der Gate- (8) und der Source-Elektrode (9) des zugehörigen Feldeffekttransistors (4) mindestens 50 % des Betrages der in diesem Fall zwischen der Leiterbahn (11) und der Leiterbahn (12) bestehenden Spannung (u₁) ausmacht.

## Patentansprüche

1. Flüssigkristall-Anzeigevorrichtung mit einer Vielzahl von Bildpunkten mit jeweils mindestens einem zugeordneten Feldeffekttransistor (4) mit jeweils einer Gate- (8), einer Source- (9) und einer Drain-Elektrode (10), wobei die Drain-(10) oder die Source-Elektrode (9) mit dem zugehörigen Bildpunkt in leitender Verbindung steht, während die andere der beiden vorgenannten Elektroden an eine erste Leiterbahn (12) und die Gate-Elektrode (8) über einen Kondensator (6) an eine zweite Leiterbahn (11) angeschlossen ist, wobei an die Leiterbahnen (11, 12) in gleicher Weise einheitlich mehrere Feldeffekttransistoren (4) angeschlossen sind und die Leiterbahnen (11, 12) gegeneinander isoliert sind,
**dadurch gekennzeichnet**,
dass der Kondensator (6) mit einem Widerstand (7) eine Parallelschaltung bildet und dass Kapazität und Widerstandswert der Parallelschaltung so ausgelegt sind, dass der Bildpunkt über die Gate-Elektrode (8) auch bei längerem Betrieb und inhomogenen Feldeffekttransistoreigenschaften zuverlässig gesteuert wird und dass im Falle eines Kurzschlusses (14) zwischen der Gate-Elektrode (8) und der mit der ersten Leiterbahn (12) verbundenen Elektrode eines einzelnen Feldeffektransistors (4) die übrigen Bildpunkte, davon unbeeinflusst, störungsfrei ansteuerbar sind.

2. Flüssigkristall-Anzeigevorrichtung nach Anspruch 1,
**dadurch gekennzeichnet**,
dass der Wert für das Produkt aus Widerstandswert und Kapazität der Parallelschaltung zwischen 0,04 Sekunden und 400 Sekunden beträgt.

3. Flüssigkristall-Anzeigevorrichtung nach Anspruch 1 oder 2,
**dadurch gekennzeichnet,**
dass der Kondensator (6) und der Widerstand (7) als Dünschichtelemente ausgebildet sind.

4. Flüssigkristall-Anzeigevorrichtung nach einem der vorangegehenden Ansprüche,
**dadurch gekennzeichnet,**
dass die Bildpunkte und die Dünnschichtelemente auf einem lichtdurchlässigen und isolierenden Substrat angeordnet sind.

5. Flüssigkristall-Anzeigevorrichtung nach einem der vorangehenden Ansprüche,
**dadurch gekennzeichnet,**
dass jedem Bildpunktelement mit seinem zugehörigen Feldeffekttransistor (4) zusätzlich mindestens ein weiterer redundanter Feldeffekttransistor (13) zugeordnet ist.

6. Flüssigkristall-Anzeigevorrichtung nach einem der vorangehenden Ansprüche,
**dadurch gekennzeichnet,**
dass die Bildpunkte matrixförmig und die Leiterbahnen (11, 12) zeilen- und spaltenförmig angeordnet sind.

## Claims

1. Liquid crystal display device with a plurality of image dots each with at least one respectively associated field effect transistor (4) each with a gate electrode (8), a source electrode (9) and a drain electrode (10), wherein the drain electrode (10) or the source electrode (9) stands in conductive connection with the associated image dot, whilst the other one of both the aforementioned electrodes is connected to a first conductor track (12) and the gate electrode (8) is connected by way of a capacitor (6) to a second conductor track (11), wherein several field effect transistors (4) are connected uniformly in like manner to the conductor tracks (11, 12) and the conductor tracks (11, 12) are insulated one from the other, characterised thereby, that the capacitor (6) together with a resistor (7) forms a parallel connection and that the values of resistance and capacitance of the parallel connection are so designed that the image dot is controlled reliably by way of the gate electrode (8) even in the case of longer operation and non-homogeneous field effect transistor properties and that, in the case of a short-circuit (14) between the gate electrode (8) and that electrode of an individual field effect transistor (4), which is connected with the first conductor track (12), the remaining image dots are selectably drivable free of disturbance and uninfluenced thereby.

2. Liquid crystal display device according to claim 1, characterised thereby, that the value of the product of the values of resistance and capacitance of the parallel connection amounts to between 0.04 seconds and 400 seconds.

3. Liquid crystal display device according to claim 1 or 2, characterised thereby, that the capacitor (6) and the resistor (7) are constructed as thin layer elements.

4. Liquid crystal display device according to one of the preceding claims, characterised thereby, that the image dots and the thin layer elements are arranged on a translucent and insulating substrate.

5. Liquid crystal display device according to one of the preceding claims, characterised thereby, that each image dot element with its associated field effect transistor (4) is associated additionally with at least one furthe redundant field effect transistor (13).

6. Liquid crystal display device according to one of the preceding claims, characterised thereby, that the image dots are arranged in the form of a matrix and the conductor tracks (11, 12) are arranged in the form of lines and columns.

## Revendications

1. Dispositif d'affichage à cristaux liquides comprenant une pluralité de points d'image avec au moins un transistor à effet de champ (4) attribué à chacun, et respectivement une électrode de grille (8), de source (9) et de drain (10), l'électrode de source (9) ou de drain (10) étant en liaison conductive avec le point d'image associé, tandis que l'autre des deux électrodes précitées est raccordée à une première piste conductive (12) et l'électrode de grille (8) à une seconde piste conductive (11) par un condensateur (6), plusieurs transistors à effet de champ (4) étant connectés de la même manière unitairement aux pistes conductives (11, 12) et les pistes conductives (11, 12) étant isolées entre elles,
caractérisé en ce que
le condensateur (6) forme, avec une résistance (7), un montage en parallèle et en ce que la capacité et la valeur de résistance du montage en parallèle sont définies de manière à commander, par l'intermédiaire de l'électrode de grille (8), le point d'image de manière fiable même pour une durée de fonctionnement plus longue et des propriétés non homogènes des transistors à effet de champ et, en cas de court-circuit (14) entre l'électrode de grille (8) et l'électrode d'un seul transistor à effet de champ (4), reliée à la première piste conductive (12), à permettre la commande sans défaillance des points d'image restants et, ce, sans en subir l'influence.

2. Dispositif d'affichage à cristaux liquides selon la revendication 1,
caractérisé en ce que
la valeur pour le produit résultant de la valeur de résistance et de la capacité du montage en parallèle est de l'ordre de 0,04 seconde à 400 secondes.

3. Dispositif d'affichage à cristaux liquides selon la revendication 1 ou 2,
caractérisé en ce que
le condensateur (6) et la résistance (7) se présentent comme des éléments à couches minces.

4. Dispositif d'affichage à cristaux liquides selon l'une des revendications précédentes,
caractérisé en ce que
les points d'image et les éléments à couches minces sont disposés sur un substrat isolant et translucide.

5. Dispositif d'affichage à cristaux liquides selon l'une des revendications précédentes,
caractérisé en ce que
chaque élément de point d'image et son transistor respectif à effet de champ (4) est associé au moins à un autre transistor redondant supplémentaire à effet de champ (13).

6. Dispositif d'affichage à cristaux liquides selon l'une des revendications précédentes,
caractérisé en ce que
les points d'image se présentent sous la forme d'une matrice et les pistes conductives (11, 12) sous forme de lignes et de colonnes.
